# EUROPEAN PATENT APPLICATION

(11) **EP 3 699 856 A1**
(43) Date of publication of application: **26.08.2020**
(21) Application number: 19158449.9
(22) Date of filing: 21.02.2019
(51) Int. Cl.: G06Q 30/00

(54) **TAGGING OF AN OBJECT**

(71) Applicant: INL - International Iberian Nanotechnology Laboratory, 4715-330 Braga (PT)
(72) Inventor: MONTELIUS, Lars, 4715-330 Braga (PT); HÅKANSSON, Ulf, 4715-330 Braga (PT); PASTRANA CASTRO, Lorenzo, 4715-330 Braga (PT)
(74) Representative: AWA Sweden AB

(57) **Abstract**

The present invention relates to a method for tagging an object (101). The method comprising: measuring a physical characteristic pertaining to the object (101); determining an object reference unique identification (105) from the physical characteristic pertaining to the object (101); generating a cipher (108) using an encryption algorithm (107) having the object reference unique identification (105) as input data; tagging the object (101) with the cipher (108); and registering the cipher (108) and a key (110) for decrypting the cipher (108) in a ledger (111).

## Description

### TECHNICAL FIELD

The present invention relates to a method for tagging an object. The method allows for efficient authentication of the object. By the method efficient and secure tracking of the object along, for example, a supply chain, may further be achieved.

### BACKGROUND

In the context of global transportation and distribution of goods such as food, beverage, medicine, jewelry, designer clothes, art or other items and merchandise, it is generally important to tag a product for identification and to provide information concerning the product. The tagging allows for tracking of the product along a supply chain. The tagging can be made by giving the product a unique identification tag, such as a serial number, a bar code or similar, possibly together with a description of the product. The identification tag may be provided as a tag that is attached to the product, is engraved or in other ways integrated into the product. However, if such a tag can be copied, it is challenging to ensure that it is the authentic product that is offered later in the supply chain. Also, when tagging only the holder or casing in which the product is enclosed, it is difficult to ensure that the correct product is present in the holder. For instance, there can be a problem with counterfeiting if the product and/or casing may be easily exchanged or copied by a third party. With today's long global supply chains and just-in-time delivery systems it is of interest to several parties along the chain to be able to access information on the uniqueness, authenticity, status and history of the product itself, as well as the casing containing the product. Different stakeholders may be interested in or be entitled to different levels of the information in this respect. Using a simple static tag such as a barcode, only the information enclosed in the barcode will be available at any given time. For merchandise where there is a temporal aspect to the supply chain, for instance for food which may degrade over time, it is also difficult to verify the status of the enclosed object related to the time it spent in the supply chain unless it is removed from the casing and inspected.

### SUMMARY OF THE INVENTION

In view of the above, it is an object of the present invention to overcome or at least mitigate the problems discussed above. In particular, it is an object to provide a method for tagging an object or its holder with a tag which uniquely identifies the object, as well as a tag produced by the method.

According to a first aspect of the invention, there is provided a method for tagging an object, the method comprising the steps of: measuring a physical characteristic pertaining to the object; determining an object reference unique identification from the physical characteristic pertaining to the object; generating a cipher using an encryption algorithm having the object reference unique identification as input data; tagging the object with the cipher; and registering the cipher and a key for decrypting the cipher in a ledger.

By the term "object" should, in the context of the present specification, be understood a physical entity, a material and/or a substance, i.e. a tangible object, which may be (but is not limited to) goods such as wine, perfume, a physical item, a medical substance or a biological sample.

By the term "cipher" should, in the context of the present specification, be understood an identification note based on encryption or codification of the measured physical characteristic of the object. The cipher may be a barcode, QCR code, RF-tag, optical code, chemical color tag, magnetic tag, pattern, surface modification, embodiment in a material, etc.

By the term "encryption algorithm" should, in the context of the present specification, be understood a method for unidirectional or bidirectional scrambling (hashing, codifying, encrypting) of the information relating to the physical characteristics pertaining to the object, contained in the object reference unique identification. The algorithm used may be predetermined or dynamic.

By the term "tagging" should, in the context of the present specification, be understood any form of labeling, marking, engraving, hologram, color or magnetic marking, cryptographic anchor or sticker in or on the holder or the object. The act of tagging is here used to describe the act of attaching a tag to the holder or the object or incorporating a tag in the holder or the object. The tag may be a physical object. The act of tagging the object may be construed as the act of labeling the object. The act of tagging the object may be construed as the act of marking the object. Acts of tagging are well known to a person skilled in the art and will not be described in any detail herein.

By the term "holder" should, in the context of the present specification, be understood an enclosure, package, container, vessel, casing or holder which can be, but is not limited to flask, jar, cask, kettle, cup, bowl, sack, bottle or box, intended to hold the object. The holder may enclose the object fully or partially.

By the term "ledger" should, in the context of the present specification, be understood as an archive, set of records or database adapted to hold information. A key for decryption of the cipher may further be provided via secure ledger network allowing for future authentication and/or authentication verification of the object. The ledger may allow for tracing of any future authentication efforts, e.g. by logging a read-out of the ledger. These measures mitigate exchange or copying or performing otherwise undesired changes to the product.

By the term "physical characteristic pertaining to the object" should, in the context of the present specification, be understood a physical property of the object that can be quantified by a measurement or measurements. The physical characteristics may be referred to as a physical quantity. The physical property or quantity may be defined by a number and a unit or be given as a relative number or quote with regard to a reference sample or number.

To this end, the physical characteristics should be understood as a characteristic of matter that is not associated with a change in its chemical composition.

Examples of physical properties are physical composition, optical property, e.g. transparency or reflectivity, mass, amount of substance, density, hardness, surface smoothness, shape, color, viscosity, pressure, molecular weight, electrical property or heat conductivity etc. The physical characteristics should further be understood to cover properties and quantities such as molecular weight, number of moles, pH, DNA or RNA content, protein content, sugar content etc. To this end, the term "physical characteristic pertaining to the object" should also, in the context of the present specification, be understood a characteristic of the object, or of an identity beacon arranged in contact with the object. As discussed above, the characteristic can be, but is not limited to physical or chemical properties such as structural, mechanical or electromagnetic properties, absorption, surface structure, reflectivity, scattering, luminescence, fluorescence, refractive index, concentration of chemical compounds (e.g. sugar, alcohol or drugs), crystalline structure, viscosity, DNA or a plurality of characteristics which in combination give an indication of aging or ripeness. Methods of measuring physical characteristic pertaining to the object are well known to a person skilled in the art and will not be described in any detail herein.

By the term "reference unique identification" should, in the context of the present specification be understood a codified, e.g. a simplified, shortened and/or encoded, version of a dataset used to describe the "physical characteristic pertaining to the object" in a unique form. The reference unique identification for a fluorescence measurement could e.g. be the respective relative fluorescence values resulting from a predetermined set of excitation wavelengths under a set of predetermined laboratory conditions. The reference unique identification of a complete DNA sequence could for instance be its short tandem repeat (STR) sequence.

The present method allows for verification of the authenticity of an object. The method further allows for efficient and secure tracking of the object along, for example, a supply chain. The authenticity of the object may be determined by the cipher and the key in the ledger.

The method may further comprise measuring of a physical characteristic of the object. By the term "physical characteristic of the object" should, in the context of the present specification, be understood a characteristic of the object itself. The function of the physical characteristic is to provide a unique "fingerprint" pertaining to the object. The fingerprint may be unique to the object for to a class of objects having at least a set of chemical and/or or physical priorities in common. The physical characteristic of the object may be one or more of: DNA, chemical fingerprint, optical property, and surface structure.

The method may further comprise measuring a physical characteristic of an identity beacon arranged in contact with the object. This feature describes the case where the method of measuring a "physical characteristic pertaining to the object" specifically refers to measuring a physical characteristic of the identity beacon instead of or in combination with a physical characteristic of the object itself, or to measuring a physical characteristic of the object by means of the identity beacon.

By the term "in contact with" should, in the context of the present specification, be understood an identity beacon in contact with, embedded in, adjacent to, in vicinity to or close to the object. The measurements may be made on the identity beacon, i.e. a physical characteristics of the identity beacon may be measured, or a measurement can be made by the identity beacon, i.e. a reporter. The physical characteristics of the identity beacon is to be seen as the physical characteristic pertaining to the object. Alternatively, the identity beacon, in the form of the reporter, may be configured to measure the physical characteristic pertaining to the object and then report the result. The identity beacon may for example enhance or quench a physical or chemical parameter of the object.

By the term "identity beacon" should, in the context of the present specification, be understood a tag comprising a probe, resonator, near-field sensor, reference tag, cryptographic anchor, marker molecule, optical antenna, nanoparticle or any kind of suitable reporter.

The encryption algorithm may further have information pertaining to the method of measuring the physical characteristic pertaining to the object as input data. Hence, information pertaining to the method of measurement of the physical characteristic pertaining to the object may be incorporated into the algorithm. By defining specific information pertaining to the method of measuring the physical characteristic pertaining to the object (protocol, specification identification scheme), it may be possible to transfer the information for read-out of the physical characteristic pertaining to the object. The method of measurement can be, but is not limited to: angular specific spectroscopy, location specific surface measurements, DNA protocols, etc. The information specifies how the reference unique identification should be obtained through a specific measurement or a specific measurement protocol. By way of example, the information pertaining to the method of measurement may consist of instructions for repeating the measurement of the physical characteristic pertaining to the object. This allows for authorized agents to obtain information on how to validate the object enclosed in the holder. The authenticity of the object may thereby be verified.

The method may further comprise a selection of encryption algorithm to be used. The selection may be made from a set of predetermined encryption algorithms. The selection of encryption algorithm may be based on information pertaining to the method of measuring the physical characteristic pertaining to the object. This allows for different agents (transporters, customers) along the supply chain to access different levels of information, effectively verifying different characteristics pertaining to the object.

The method may further comprise registering, in the ledger, information pertaining to a method of measuring the physical characteristic pertaining to the object.

The information on the measurement method may be recorded in the ledger as well as the cipher itself. This allows for an accurate verification of the authenticity of the object. It also allows for the definition of very specific measurement steps to obtain the "fingerprint" of the object. This may add additional security, i.e. it is more difficult to provide false "fingerprints" if the obtained "fingerprint" is also sensitive to how it was determined or measured, i.e. more specific/complicated identification methods may be used. The registered method of measuring the physical characteristics pertaining to the object may be the method used for measuring the physical characteristic pertaining to the object.

The method may further comprise that upon receiving a request for the key for decrypting the cipher, registering, in the ledger, information pertaining to the request.

The term "information pertaining to the request" may, in the context of the present specification, relate to identity information, roles or grants of the user, number of times the user has requested the information, whether or not the request was successful, etc.

The method may further comprise that the request comprises an identity of the requestor, and when registering information pertaining to the request also registering the identity of the requestor.

The term "identity" may, in the context of the present specification, be an IP-address, a person, governmental agency, an electronic device, a server, etc.

The ledger may require an authentication procedure. Requests may be allowed or denied based on authentication checks and it is possible to keep track of who makes the request.

The method may further comprise incorporating the object within a holder, wherein tagging the object with the cipher is made by tagging the holder.

Hence, a way of authenticating the object within the holder is described. The reference unique identification for the object is used to create the cipher. However, the tag is eventually placed on or in the holder. Using this method, the object is uniquely linked to its holder by means of the tag alone. In theory, the holder could be replaced, if the same tag were to be transferred to the new holder. This method of tagging may be used when the holder itself is of no unique significance, or has no uniquely distinguishing characteristic features.

The method may further comprise incorporating the object within a holder, wherein tagging the object with the cipher comprises: recording the cipher in a tag, and attaching the tag to the holder or incorporating the tag in the holder.

By the term "tag" should, in the context of the present specification, be understood a label, mark, barcode, QRC code, engraving, RF-tag, magnetic label, chemical color indication label, embossing or written text, but is not limited hereto. In particular, the tag does not have to be readable by eye, but could be detectable only through specific read-out equipment. The tag and/or the holder may be constructed from paper, plastic, cloth or any kind of suitable packaging material, whereas the recording of the cipher in the tag may be made by ink, thread, engraving, digital or analogue recording. By way of example, the tag could be woven into fabric. In particular, for edible products, such as food or medicine, both holder, tag and cipher recording may be made of edible material.

By the term "incorporating" should, in the context of the present specification, be understood a tag fastened (embodied, enveloped, enclosed, joined, united) fully or partly in connection with the holder (e.g. by means of glue, magnets or other attaching means) or physically enclosed in the holder (e.g. by fusing or mixing). By way of example nanoparticles such as scatters and/or quantum dots can be inserted in the holder. The insertion may be made before, during or after the formation of the holder.

The method may further comprise: measuring a physical characteristic pertaining to the holder; determining a holder reference unique identification from the physical characteristic pertaining to the holder; and generating the cipher using an encryption algorithm having, as input data, a combination of the object reference unique identification and the holder reference unique identification.

By the term "combination" could, in the context of the present specification, be understood a convolution, addition, normalization or concatenation, but other combinations are also possible.

Hence a way of authenticating the object within the holder is provided. The reference unique identifications for the object and holder may be different. However, they may be combined in the same cipher. Using this method, the object may be uniquely linked to its holder. The method allows for a unique linking of a product to the holder of the product. A non-liming example of a product may be food stuff and the holder may be a can or a bottle comprising the food stuff, the product may be a medically active substance and the holder can be a pill enclosing the medically active substance or the product may be a biological sample and the holder can be a container holding the biological sample.

The term "determining a holder reference unique identification from the physical characteristic pertaining to the holder" may relate to the measurement of physical or chemical properties such as structural, mechanical or electromagnetic properties, absorption, surface structure, reflectivity, scattering, luminescence, fluorescence, refractive index, concentration of chemical compounds (e.g. sugar), crystalline structure, viscosity, DNA or a combination of characteristics which in combination give an indication of aging or ripeness. The function of the physical characteristic is to provide a "fingerprint" pertaining to the holder.

The physical characteristics of the holder may be the same as exemplified for the physical characteristics of the object.

The tag may be a dynamic tag. By the term "dynamic" should, in the context of the present specification, be understood a tag which is possible to update or change, e.g. a smart label which may record information and add it to the information already present in the cipher on the tag, or replace the old information present in the cipher on the tag. By way of example, this method may be used when it is of interest to record read-outs or updates within the cipher itself. This allows for tracking of the history of the object or holder, e.g. by means of (but not limited to) measurements of temperature, humidity, light exposure, time or pressure. The dynamic tag may further provide different results when read in different ways (angle, polarization, wavelength, etc.) thus providing additional security. Information pertaining to how the smart label should be read may further be recorded in a ledger. The ledger may be a distributed ledger. The ledger may be the same ledger as used for registering the cipher and the key for decrypting the cipher. The distributed ledger may be a block-chain ledger. Additionally, the tag may comprise a real time internal chronometer for time recording and reference purposes when logging the readings.

By registering updated information from a dynamic tag, it is possible to track the physical status of the object and/or holder throughout the supply chain. This information can prove important in particular when handling food or medical products (i.e. vaccines), which are considered at risk when certain environmental factors such as temperature or humidity are outside specified bounds for a prolonged period of time. In addition, by registering information on read-outs in the ledger, a record will be accessible, tracking the number of read-outs of each specific object. The transfer of the object from one holder to a second holder could further be recorded (and the corresponding information be distributed and described above).

The method may further comprise recording, in the dynamic tag, temporal information pertaining to a physical status or environment of the object and upon a read-out of the cipher in the dynamic tag, changing the cipher. The recording may comprise changing a physical state of the dynamic tag. The physical change may be a change in the electronic and/or electric properties of the tag. The recording may be a structural change to the tag.

The dynamic tag may be capable of providing regular read-outs of physical characteristics upon request. The tag may be of a type which changes properties continuously in response to monitored physical characteristic. The dynamic tag may also change in response to a read-out, thus providing secure information on the number of read-outs throughout the supply chain. Providing a method to track unauthorized attempts at accessing information about the object, as the number of read-outs can be compared with the number of requests to the ledger. Alternatively, the reading can give a new link (pointer) to a new element in the ledger.

The method may further comprise: incorporating the object within a holder; measuring a physical characteristic pertaining to the holder; determining a holder reference unique identification from the physical characteristic pertaining to the holder; generating a further cipher using an encryption algorithm having the holder reference unique identification as input data; tagging the holder with the further cipher; and registering the further cipher and a key for decrypting the further cipher in the ledger.

According to a second aspect of the invention, the above object is achieved by the creation of a tag, the tag comprising a cipher comprising a measured physical characteristic pertaining to the object and information pertaining to a method of measuring the physical characteristic pertaining to the object and registering the cipher and a key for decrypting the cipher in a ledger.

By constructing a tag containing measured physical properties together with the method of measurement, holding this information in a ledger and using this to tag an object, several technical advantages are achieved. First, measurements of the physical characteristics of the object are unknown if not first consulting the ledger, thus creating a record of the read-out, making the object harder to copy, replace or counterfeit. Second, by constructing the ledger such that read-out of the ledger is recorded and requires authentication, the identity of the read-out request can be tracked. The second aspect may further have the same features and advantages as the first aspect.

It is noted that the invention relates to all possible combinations of features unless explicitly stated otherwise.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or acts of the methods described as such device and methods may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### BRIEF DESCRIPTION OF THE DRAWINGS

The above and other aspects of the present invention will now be described in more detail with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.
Figure 1a illustrates a process of creating and updating a cipher, incorporated in a tag, based on measurements of a physical characteristic pertaining to an object and/or a holder.
Figure 1b illustrates a flow diagram of a method for creating and updating a cipher, incorporated in a tag, based on measurements of a physical characteristic pertaining to an object and/or a holder.
Figure 2a illustrates a process of authenticating and reading information from a ledger containing information pertaining to an object and/or holder.
Figure 2b illustrates a flow diagram of a method for authenticating and reading information from a ledger containing information pertaining to an object and/or holder.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person. The systems and devices disclosed herein will be described during operation unless explicitly stated otherwise.

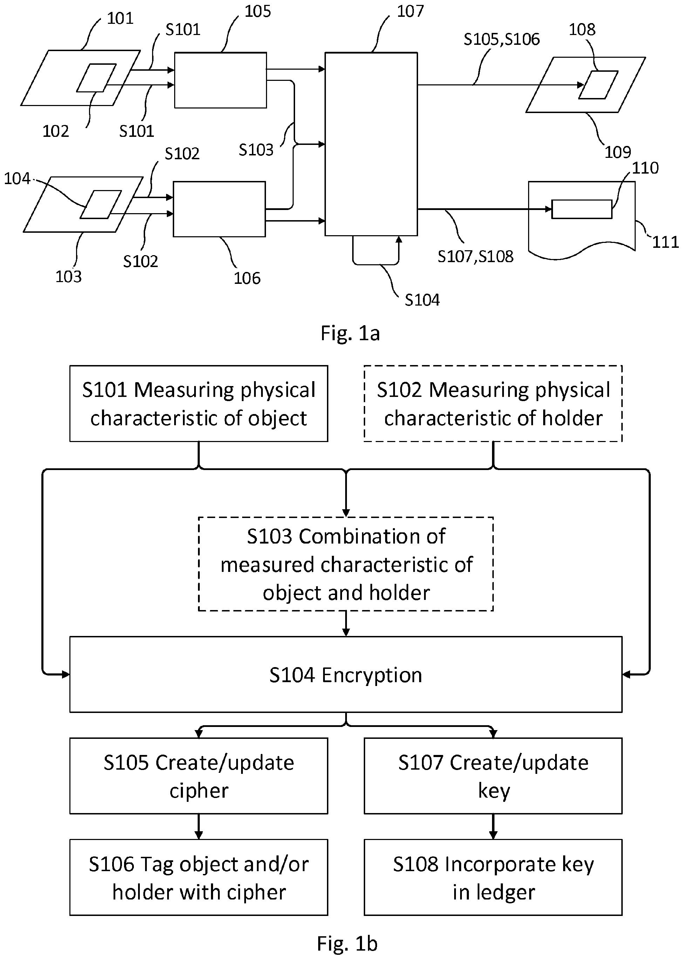

In connection with figures 1a and 1b the process of creating a cipher 108 using information of an object 101 and/or a holder 103 and creating a record in a ledger 111 will be discussed. A step noted "S" in Figure 1a correspond to the same step in Figure 1b. In a step S101, the physical characteristic pertaining to the object 101 is measured. The physical characteristic of the object 101 may be measured in many different ways. The measurement process may be a process of read-out by a computer or measurement hardware or both in combination. The measurement process may be e.g. chemical, optical or physical. Alternatively, or in combination, a physical characteristic of an identity beacon S102 embedded in the object 101 may be measured. The identity beacon may be a reporter of the physical characteristics of the object. The identity beacon may be a tag, label or marker providing a unique measurable fingerprint to the object. By measuring the physical characteristic of the object 101 and/or a physical characteristic of an identity beacon 102 embedded in the object 101 a physical characteristic pertaining to the object 101 is measured. Based on the physical characteristic pertaining to the object 101 an object reference unique identification 105 may be determined.

Alternatively, or in combination, in a step S102, a physical characteristic of the holder 103 may be measured. Alternatively, or in combination, a physical characteristic if an identity beacon 104 embedded in the holder 103 may be measured. By measuring the physical characteristic of holder 103 and/or the physical characteristic of an identity beacon 104 embedded in the holder 103 a physical characteristic pertaining to the holder 103 is measured. The measurement process may be a process of read-out by a computer or measurement hardware or both in combination. The measurement process may be e.g. chemical, optical or physical. Based on the physical characteristic pertaining to the holder 103 a holder reference unique identification 106 may be determined.

Steps S101 and S102 may be performed one after another or in parallel. For example, step S101 may be made before step 102 or step S102 may be made after step 102. Further, steps S101 and S102 may be made partly in parallel. If both measurements S101 and S102 are made, the measured physical characteristics pertaining to the object 101 and to the holder 103 may be combined in step S103 into a combined physical characteristic. Based on the combined physical characteristic a combined reference unique identification may be determined.

The object reference unique identification, the holder reference unique identification and/or the combined reference unique identification may then be used for generating S104 a cipher 108. The generation of the cipher 108 is made by using an encryption algorithm 107 having the object reference unique identification 105, the holder reference unique identification 106 and/or the combined reference unique identification as input data. The encryption algorithm may also be used to update an already generated cipher 108. In connection with the generation of the cipher 108 a key 110 for decrypting the cipher 108 may be generated S107. The cipher 108 may be used S106 to tag the object and/or holder. The tagging S106 may be made by a digital process in a computer, a chemical process performed by a chemical substance and/or a physical process, performed by an alteration of a physical substance. Nonlimiting examples of physical processes may be the alteration of a surface by etching or coloring or alteration of its chemical composition. The tagging S106 may be made by incorporating the cipher 108 in a tag 109, which is then attached to the holder and/or object. The key 110 may be registered S108 in a ledger 111.

The key may be associated or linked to the cipher or to a representation of the cipher.

The ledger may be an archive, set of records or database adapted to hold information. The ledger may be a distributed network ledger which may be based on block-chain technology, allowing for efficient distribution of the ledger to several nodes. The network structure and underlying block-chain technology effectively prevents hampering and verification of the information. Updating of the respective nodes in a block-chain network is made by record comparison, allowing for increased transparency and redundancy.

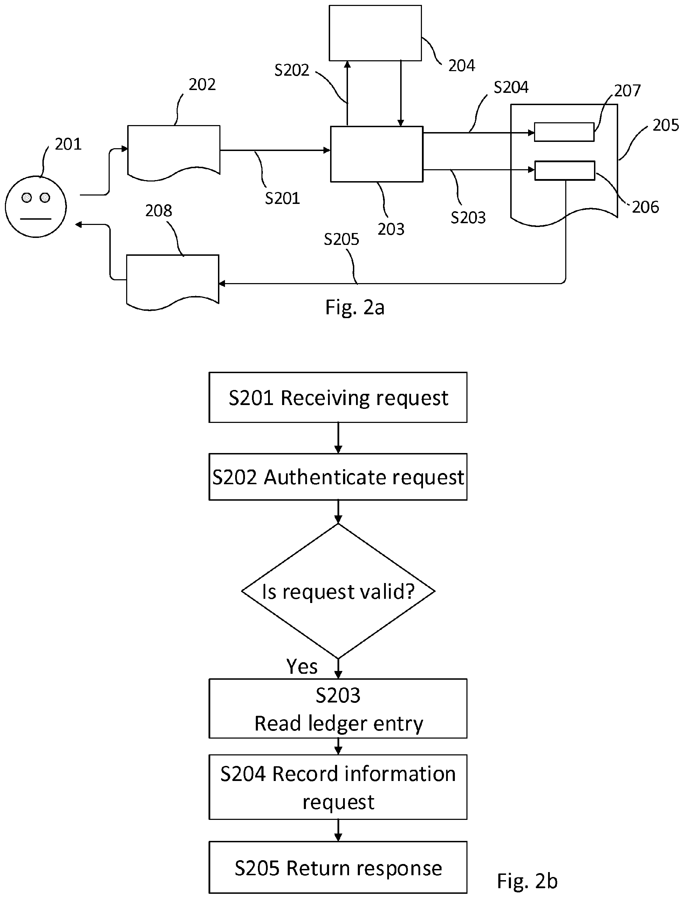

In connection with figures 2a and 2b the process of a requestor or user 201 requesting information from a ledger 205 and receiving a response 208 will be discussed. A step noted "S" in Figure 2a correspond to the same step in Figure 2b. In a step S201, the requestor 201 submits a request 202 for access to information. The request 202 is received by a control unit 203. The control unit 203 may be a server located within a company or a governmental agency. In case the ledger 111 is a distributed ledger, the control unit 203 may also be any one of the ledger nodes. The request 202 may be in the form of a written message, a web service request, an email, a phone call, or any other suitable means of communication. The control unit 203 may then authenticate the rights of the user to access the requested information in an authentication step S202. The authentication S202 may be made by an external agency or trusted third party, e.g. a membership service provider 204 (MSP). The MSP 204 provides digital identities for the users of the ledger, i.e. turn verifiable identities into members of the leger network. The membership service provider may use x.509 certification but other membership structures may also be used. It may also be made by comparison to an internal list of authorized requests, held by the control unit 203. The authorization may provide individuals with different rights (e.g. read, edit). It is desirable that the identities are verifiable, i.e. issued by a trustworthy authority such as the MSP. To achieve this a public key infrastructure (PKI) may be used. The PKI may further comprise digital certificates, public and private keys, certificate authorities and a certified revocation list. Undesired identities may thereby be blocked from assessing the information provided in the ledger 111.

If the request is valid, a ledger entry 206 is read from the ledger 205 in step S203. Simultaneously, a ledger log entry 207 may be made. In step S204, in the ledger 205 containing information pertaining to the request. The ledger log entry 207 allows logging of information about who reads the ledger and for tracing of any authentication efforts, e.g. a reading of the ledger or request for cipher key.

The control unit returns a response 208 to the user 201 in a response step S205.

The above discussed general processes can be modified in a number of ways in order to accommodate specific merchandise and specific supply chains.

According to one specific example, an object reference unique identification 105 in the form of a chemical fingerprint of port wine, the port wine being the object 101, may be used to uniquely identify port wine contained in a holder 103 in the form of a cask. The chemical fingerprint may be determined according to a specific measurement protocol by the producer. The specific measurement protocol will in this example be regarded as the measurement S101 of the physical characteristic pertaining to the object 101. Coded data pertaining to the measurement result is provided in a readable tag 109 of the cask comprising the port wine. Data pertaining to the chemical fingerprint, and possible also data about how the measurement was done is stored in a distributed block-chain ledger 111. It is desirable to prevent undesired changes to the port wine 101 in the cask 103. Undesired changes to the port wine 101 may be exchange, unauthorized additions or dilution.

A requester 201, in the form of a third party, can then read the tag and verify the authenticity of the product. In case the information in the cipher 108 is encrypted, the third party must first obtain the cipher key 110 from the ledger 111. The act of reading of the ledger may be stored S204 in order to register the fact that someone has read the data. The tracking of the "reading of data" may depend on the rights of the individual. The reading of a requester in the form of a company along the supply chain may be recorded, whereas a customer reading may not be recorded. To this end, the data accessible to the different stakeholders may vary. This may be achieved by registering, in the cipher 108, a number of different encryption algorithms 107, each conveying information about a specific method of measurement S101. A first requester 201 may be authorized to validate the amount of port wine 101 within the cask. This information is obtained via a first measurement method, which is conveyed by the tag 109 in plain text with no encryption. An example may be the tagging of the cask with the weight of the wine-filled cask at the time of production. A second requester 201 may be authorized to validate the identity of the port wine 101 as well as its amount. This information is obtained via a second measurement method S101, which is conveyed by the cipher 108 in an algorithm 107 which is encrypted using an encryption key 110, which is stored in the ledger 111. The second requester 201 may validate the identity of the port wine 101 only after obtaining the key 110 from the ledger 111, decrypting the cipher 108 and using the information about the measurement method S101 to perform the measurement and finally comparing a newly measured chemical fingerprint on the wine now contained in the cask with the chemical fingerprint previously recorded in the cipher 108. By obtaining the same chemical fingerprint as the chemical fingerprint registered at production, the second requester may be assured that the port wine has not been altered or replaced. A third requester 201 may be authorized to measure the sugar content of the port wine as well as validate the identity of the port wine and its amount. This information is obtained via a second measurement method S101, which is conveyed by the cipher 108 in a further algorithm 107 which is encrypted using a further encryption key 110, which is also stored in the ledger 111. If the third requester 201 is authorized to access the further encryption key 110, the third requester 201 may measure the sugar content of the wine after decrypting the cipher 108 and using the information about the measurement method S101 to perform the measurement. The third requester may then compare the measured sugar content with the sugar content at the time of production which has been previously recorded in the cipher 108 and/or in the ledger 111. The third requester may then send an up-to-date record of the sugar content of the port wine to be stored in the ledger 111 together with the original record made by the producer. In this way, each requester may contribute to a complete temporal record of the identity and status of the port wine 101 along the entire supply chain.

The producer, or someone else, may at a later time redistribute the port wine to bottles, each bottle now becoming a holder of an object 101 in the form of wine. When doing so the chemical fingerprint of the port wine can again be determined and possibly compared to the previous measurement results. The new chemical fingerprint may than be stored in the ledger 111 for later verification of its authenticity. To this end, each bottle can be provided with a unique tag 109 as discussed for the cask. To provide an even better method for authenticity, an identification (fingerprint) of the cask or bottle may be convoluted with the fingerprint of the port wine 101 in the cipher 108. In the above example, a further measurement of the cork may be made and linked to the bottle and/or port wine. In addition, several measurements may be made resulting in a record of the dynamic status of the wine, e.g. its sugar content or cloudiness throughout the supply chain.

According to another specific example, the object 101 may be the active substance of a medication enclosed in a holder 103. The holder 103 may be a container but also a pill consisting of digestible and biologically degradable material. In this case, the chemical composition of the active substance may function as the object reference unique identification 105. The composition of the active substance may be specific for one patient, patient group or batch of manufacture or distribution, and the holder 103 can be tagged with a unique code linking the medication to that patient, patient group or batch of manufacture or distribution, and encoded in a cipher 108. The cipher can be read by the patient or medical personnel 201 before distribution and intake. This allows for the verification of the correct medication being delivered to the intended patient. Furthermore, the tag used to record the cipher 108 may be chemical. When reading the cipher, the tag is exposed to a read-out chemical which under pre-specified conditions results in a change in physical characteristic of the tag. The change in physical characteristic can be e.g. a change in color and the pre-specified conditions can be a chemical composition, e.g. water content, indicative of the expected effectives of the medical substance. In this way, it is possible to directly analyze important characteristics of the medication before distributing it to the patient.

According to another specific example, the object may be a piece of physical good 101 with a nanoscale reporter 102 embedded in the material. The measurement of a physical characteristic S101 is then made on the reporter 102, measuring e.g. its surface structure or optical properties.

The above discussed computational devices and methods, such as the encryption algorithm 107, the measurement S102 of the physical characteristic of the object and/or the measurement of the physical characteristic of the holder may be implemented in full or in part as software, firmware, hardware or a combination thereof. Certain components or all components may be implemented as software executed by a digital signal processor or microprocessor, or be implemented as hardware or as an application-specific integrated circuit. Such software may be distributed on computer readable media, which may comprise computer storage media (or non-transitory media) and communication media (or transitory media). As is well known to a person skilled in the art, the term computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by a computer. Further, it is well known to the skilled person that communication media typically embodies computer readable instructions, data structures, program modules or other data in a modulated data signal such as a carrier wave or other transport mechanism and includes any information delivery media.

The person skilled in the art realizes that the present invention by no means is limited to the embodiments described above. On the contrary, many modifications and variations are possible within the scope of the appended claims. Additionally, variations, to the disclosed embodiments can be understood and effected by the skilled person in practicing the claimed invention, from a study of the drawings, the disclosure, and the appended claims.

## Claims

1. A method for tagging an object (101), the method comprising:
measuring a physical characteristic pertaining to the object (101);
determining an object reference unique identification (105) from the physical characteristic pertaining to the object (101);
generating a cipher (108) using an encryption algorithm (107) having the object reference unique identification (105) as input data;
tagging the object (101) with the cipher (108);
registering the cipher (108) and a key (110) for decrypting the cipher (108) in a ledger (111).

2. The method according to claim 1, wherein the measuring of a physical characteristic pertaining to the object (101) comprises measuring a physical characteristic of the object (101), wherein the physical characteristic of the object (101) is one or more of: DNA, chemical property, optical property, electrical property, magnetic property, mechanical property, sonic property, composition and surface structure.

3. The method according to claim 1 or 2, wherein the measuring of a physical characteristic pertaining to the object (101) comprises measuring a physical characteristic of an identity beacon (102) arranged in in contact with the object (101).

4. The method according to anyone of claims 1 to 3, wherein the encryption algorithm (107) further having information pertaining to a method of measuring the physical characteristic pertaining to the object (101) as input data.

5. The method according to anyone of claims 1 to 4, further comprising selecting an encryption algorithm (107) to be used in the step of generating a cipher (108), wherein the selection of encryption algorithm (107) is based on information pertaining to a method of measuring the physical characteristic pertaining to the object (101).

6. The method according to anyone of claims 1 to 5, further comprising registering, in the ledger (111), information pertaining to a method of measuring the physical characteristic pertaining to the object (101).

7. The method according to anyone of claims 1 to 6, further comprising, upon receiving a request (202) for the key (110) for decrypting the cipher (108), registering, in the ledger (111), information pertaining to the request (202).

8. The method according to claim 7, wherein the request (202) comprises an identity of the requestor (201), and wherein registering information pertaining to the request (202) comprises registering the identity of the requestor (201).

9. The method according to anyone of claims 1 to 8, further comprising:
incorporating the object (101) within a holder (103),
wherein tagging the object (101) with the cipher (108) is made by tagging the holder (103).

10. The method according to anyone of claims 1 to 8, further comprising:
incorporating the object (101) within a holder (103),
wherein tagging the object (101) with the cipher (108) comprises:
recording the cipher (108) in a tag (109), and
attaching the tag (109) to the holder (103) or incorporating the tag (109) in the holder (103).

11. The method according to anyone of claims 9 to 10, further comprising:
measuring a physical characteristic pertaining to the holder (103);
determining a holder reference unique identification (106) from the physical characteristic pertaining to the holder (103);
wherein generating the cipher (108) comprises generating the cipher (108) using an encryption algorithm (107) having, as input data, a combination of the object reference unique identification (105) and the holder reference unique identification (106).

12. The method according to claim 11, wherein the tag (109) is a dynamic tag.

13. The method according to claim 12, further comprising:
recording, in the dynamic tag (109), temporal information pertaining to a physical status or environment of the object (101);
upon a read-out of the cipher (108) in the dynamic tag (109), changing the cipher (108).

14. The method according to anyone of claims 1 to 8, further comprising:
incorporating the object (101) within a holder (103);
measuring a physical characteristic pertaining to the holder (103);
determining a holder reference unique identification (106) from the physical characteristic pertaining to the holder (103);
generating a further cipher (108) using an encryption algorithm (107) having the holder reference unique identification (106) as input data;
tagging the holder (103) with the further cipher (108);
registering the further cipher (108) and a key (110) for decrypting the further cipher (108) in the ledger (111).

15. A tag (109) for an object (101), the tag (109) comprising:
a cipher (108) comprising information pertaining to a method of measuring the physical characteristic pertaining to the object (101) and an object reference unique identification (105), the object reference unique identification being determined from a measured physical characteristic pertaining to the object (101), the cipher being generated by an encryption algorithm (107) having the object reference unique identification (105) as input data.
